# EUROPEAN PATENT APPLICATION

(11) **EP 4 238 663 A1**
(43) Date of publication of application: **06.09.2023**
(21) Application number: 22159928.5
(22) Date of filing: 03.03.2022
(51) Int. Cl.: B08B 3/08, C11D 11/00, C11D 17/04, C11D 3/39, C11D 1/14, C11D 3/04, B09C 1/08

(54) **METHOD FOR REMOVING ORGANIC POLLUNTANTS FROM SURFACES THROUGH IN SITU GENERATED PERSULFATES AND PERSULFONATES**

(71) Applicant: Arva Greentech AG, 6300 Zug (CH)
(72) Inventor: Seryy, Sergey, 10587 Berlin (DE)
(74) Representative: Hertin und Partner Rechts- und Patentanwälte PartG mbB

(57) **Abstract**

The invention relates to a method for removal, degradation and/or detachment of one or more organic pollutant(s) from a contaminated substrate by contacting a liquid reaction mixture of a reagent A and a reagent B with the contaminated substrate, characterized in that a) reagent A comprises a base, preferably a basic/alkali metal hydroxide, and one or more sulfate-based and/or sulfonate-based anionic surfactants, and b) reagent B comprises hydrogen peroxide or other superoxide producer that has hydrogen peroxide as one of intermediate reaction steps. Furthermore, the invention also relates to a system or kit comprising in two separate containers a) a reagent A and b) a reagent B as used in the context of the inventive method described herein, and c) optionally means for forming the liquid reaction mixture from reagent A and reagent B and/or means for applying the liquid reaction mixture, reagent A and/or reagent B to a substrate.

## Description

The invention relates to a method for removal, degradation and/or detachment of one or more organic pollutants from a contaminated substrate by contacting a liquid reaction mixture of a reagent A and a reagent B with the contaminated substrate, characterized in that a) reagent A comprises a base, preferably a basic/alkali metal hydroxide, and one or more sulfate-based and/or sulfonate-based anionic surfactants, and b) reagent B comprises hydrogen peroxide or other superoxide producer that has hydrogen peroxide as one of intermediate reaction steps. Furthermore, the invention also relates to a system or kit comprising in two separate containers a) a reagent A and b) a reagent B as used in the context of the inventive method described herein, and c) optionally means for forming the liquid reaction mixture from reagent A and reagent B and/or means for applying the liquid reaction mixture, reagent A and/or reagent B to a substrate.

### BACKGROUND OF THE INVENTION

The majority of the cleaning solutions for contaminated substrates and in particular surfaces on the market are based on the principles of detaching contaminants from the surfaces, rarely on destroying them, and mostly do not combine these principles.

Furthermore, previously described methods for cleaning via oxidation, such as the one described in WO2010/052541A3, predominantly concern substrate/surface preparation for the upcoming technological procedures, not as a cleaning method by itself.

EP3525944B1 describes oxidative cleaning contaminated substrates via superoxidation. Nevertheless, these patents do not describe superoxide transformation of the reaction participants into surface active components.

Furthermore, superoxidation by applying specific solutions to substrates has been used for decolorization of substrates (US 5,962,699). However, such solutions are predominantly for the industrial use and have such high oxidative capabilities that they could be harmful to the normal user in an unprepared environment and concern mainly loose substrate, not surface cleaning.

Sustainable consumption and a resource-saving ecological footprint are current megatrends. Many cleaning solutions are offered specifically for certain types of soiling. The resulting product diversity requires large amounts of packaging - separate containers for each type of soiling and surface - and is therefore not sustainable. This diversity is based on the claim to create environmentally friendly cleaning solutions. However, these are usually weaker in their cleaning performance than those based on strong chemicals.

Furthermore, most of the products on the market even if they clean well do not eliminate odors, or even produce them during application or through chemical reaction with contaminants. Additionally, many multi-component compositions reduce the sustainability and may also be allergenic, toxic, etc.

Therefore, in light of the prior art, it would be advantageous to have a cleaning solution that
1. cleans a wide variety of different contaminations,
2. can be used on different substrates/surfaces,
3. cleans with the same efficiency as industrial solutions based on harsh chemicals,
4. works environmentally friendly,
5. encompasses a low number of exotic components,
6. possesses decolorization capabilities,
7. is non-toxic on accidental contact with skin, and/or
8. eliminates odors without additional fragrances.

In light of the prior art the technical problem underlying the present invention is to provide alternative and/or improved methods and means for achieving these desired advantages.

### SUMMARY OF THE INVENTION

This problem is solved by the features of the independent claims. Preferred embodiments of the present invention are provided by the dependent claims.

The invention therefore relates to a method for removal, degradation and/or detachment of one or more organic pollutants from a contaminated substrate by contacting a liquid reaction mixture of a reagent A and a reagent B with the organic pollutant-contaminated substrate, characterized in that
a. reagent A comprises a base, preferably a basic/alkali metal hydroxide, and one or more sulfate-based and/or sulfonate-based anionic surfactants, and
b. reagent B comprises a superoxide producer.

In preferred embodiments, the superoxide producer of reagent B is or comprises hydrogen peroxide or another superoxide producer that has hydrogen peroxide as one of intermediate reaction steps.

The present invention provides a cleaning solution (the liquid reaction mixture) that is generated by combining at least two reagents in a liquid reaction mixture whose reaction can achieve practically all of the desired advantageous properties described above.

Reagent B ensures the oxidative power, while reagent A provides the surface activity and an alkaline pH for superoxide activation during the reaction. This combination of surface activity with superoxidation in a single reaction mixture leads to significantly improved cleaning properties of the resulting solution in comparison to known cleaning methods.

The present cleaning method generates and modifies surfactants and active micelles directly on the contaminated substrate.

In embodiments, reagent A is a liquid and comprises micelles of sulfate-based and/or sulfonate-based anionic surfactants.

The use of sulfate-based and/or sulfonate-based anionic surfactants in the context of the present invention is particularly advantageous, since these surfactants stay active both under the influence of superoxidation and in alkaline conditions.

Furthermore, it is preferable to use superoxide producers that are stable under storage conditions to ensure long-time activity and to prevent a reduction of shelf-life of reagent B. Preferably superoxide producers of the invention to be included in reagent B include hydrogen peroxide, sodium percarbonate, sodium perborate, and/or sodium persulphate.

A particularly preferred superoxide producer to be used in the context of the present invention is hydrogen peroxide. Hydrogen peroxide is advantageous in the context of the invention, since it remains active for sufficient time so it can be stored in reagent B for minimum 365 days under suitable conditions, such as room temperature (about 15 - 28 °C) without direct sunlight exposition.

Preferably, the reagents of the invention do not include any components that possess or develop toxic or environmentally dangerous qualities under the superoxide degradation of the reaction of the invention.

In preferred embodiments, the reaction products of the method of the invention are not toxic or environmentally dangerous. In embodiments, the remaining reaction products that are present after termination of the reaction, for example about 15 minutes after starting the method of the invention.

Importantly, in the method of the present invention additional cleaning performance is achieved via reaction between the initially separated reagents that gives the resulting solution new properties.

Accordingly, the present invention relates to a method for removal, destruction or detachment of organic pollutants from substrates, predominantly surfaces, including porous and bulky granular materials. The present invention comprises methods for obtaining cleaning solutions via multicomponent and multistage chemical reaction between two or more reagents applied simultaneously or consequently. Reagent A necessarily provides alkaline reaction conditions and reagent B provides oxidation power by liquid or dry superoxide producent and other reagents if added are intended to improve the resulting cleaning properties of the reaction derivatives.

The method described here combines two principal approaches to cleaning substrates from different contaminations: contaminant detachment via the solution's surface activity and contaminant destruction by means of superoxidation. The unique cleaning properties described here are obtained *in situ* during the reaction process between the reagents that are initially separated and combined in the liquid reaction mixture of the invention. In addition, the method and in particular the liquid reaction mixture of the invention also provides the elimination or reduction of unpleasant odors and prevents the growth of various micro-organisms. Furthermore, the present invention could relate to cleaning bulky porous substrates e.g. soil sand etc. by means of superoxidation and surfactants in soil remediation processes.

In embodiments, the liquid reaction mixture has an alkaline pH of 8 or more, such as a pH in the range of 8-14, such as 8, 8.5, 9, 9.5, 10, 10.5, 11, 11.5, 12, 12.5, 13, 13.5, or 14. In preferred embodiments, the pH of the liquid reaction mixture is in the range of 10-14, preferably around 12.

In embodiments, the base of reagent A comprises or consists of a basic metal hydroxide (MOH), preferably an NaOH or KOH, wherein the concentration of MOH in the liquid mixture is in the range of 0.1 - 30 % (wt/wt), preferably 1-5 % (wt/wt). Possible concentration include 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 % (wt/wt).

In embodiments, the liquid mixture of reagent A and reagent B is formed prior to contacting the substrate. In alternative embodiments the liquid mixture of reagent A and reagent B is formed on the substrate or while the reagents are in contact with the substrate, i.e. after contacting reagent A and reagent B with the substrate.

It is understood that the liquid reaction mixture which includes components that are highly active in removing organic pollutants from substrates may be formed in absence of a substrate and is then added to the substrate, or that the liquid reaction mixture is generated on or in the substrate by adding forming the liquid reaction mixture while reagents A and B are in contact with the substrate. In cases of for example sandy substrates that may disperse in the liquid reaction mixture it may be understood that the liquid reaction mixture also comprises the substrate. It may also be understood that the liquid reaction mixture can surround the substrate.

In embodiments, reagent A and reagent B are liquid solutions which are mixed for forming the liquid reaction mixture. Mixing can occur prior to applying the reagents to the contaminated substrate, or it can occur on the substrate. In such embodiments, reagent A and reagent B can also be added sequentially to the substrate, or about at the same time. In embodiments, reagent A is added to the substrate first, aiming to completely cover the substrate with reagent A, and reagent B is only added afterwards.

In embodiments, reagent A and reagent B are solids, such as powders, which can be dissolved in a liquid, such as water, for forming the liquid reaction mixture. Reagent A and reagent B can be mixed as solids, such as powders, also together with a substrate, such as a powdery or siliceous substrate, such as sand or soil, and the reaction mixture can be generated by adding water or another suitable liquid to the powdery mixture resulting in a liquid reaction mixture of the invention including the substrate to be cleaned.

In embodiments, the reagents are provided as solids, such as powders, and can be mixed with water or a suitable liquid to generate a liquid reagent A and/or a liquid reagent B before mixing the reagents.

In embodiments, one of reagent A and reagent B is a solid, such as a powder, and the other of reagent A and reagent B is a liquid solution, wherein the liquid reaction mixture is formed by mixing (and thereby dissolving) the solid reagent with the liquid reagent.

From these illustrative examples of embodiments describing different ways of generating the liquid reaction mixture of the invention, a person skilled in the art can envision various suitable ways of performing the method of the invention and of generating the reaction mixture, which is best suited for the particular situation, which may in particular depend on the nature of the substrate and the organic pollutant contaminating the substrate.

In embodiments of the invention, reagent A additionally comprises a polysaccharide-based densifier, wherein preferably the densifier has a concentration range of 0.01 - 1 % (wt/wt), more preferably in a concentration of about 0.1 % (wt/wt), in the liquid mixture.

In embodiments, the concentration of the polysaccharide-based densifier is 0.01, 0.02, 0.03, 0.04, 0.05, 0.06, 0.07, 0.08, 0.09, 0.1, 0.11, 0.12, 0.14, 0.16, 0.18, 0.2, 0.22, 0.24, 0.26, 0.28, 0.3, 0.35, 0.4, 0.45, 0.5, 0.55, 0.6, 0.65, 0.7, 0.75, 0.8, 0.85, 0.9, or 1% (wt/wt).

Preferred polysaccharide-based densifiers that can be comprised by reagent A include, without limitation, cellulose-based densifiers, such as hypromellose, carboxymethylcellulose of different grades, hydroxypropyl methylcellulose, ethylcellulose, or various gums such as guar, xanthan or other gums.

In embodiments, reagent A comprises a non-polysaccharide densifier, which may be used instead of or in addition to a polysaccharide-based densifier, such as polyoxyethene stearate or other polyethylene glycols.

In embodiments, reagent A additionally comprises an odorant, wherein preferably the odorant has a concentration range of 0.001 - 1 % (wt/wt) in the liquid mixture.

In embodiments, the concentration of the odorant in the liquid reaction mixture is 0.001, 0.002, 0.003, 0.004, 0.005, 0.006, 0.007, 0.008, 0.009, 0.01, 0.02, 0.03, 0.04, 0.05, 0.06, 0.08, 0.1, 0.12, 0.14, 0.16, 0.18, 0.2, 0.22, 0.24, 0.26, 0.28, 0.3, 0.35, 0.4, 0.45, 0.5, 0.55, 0.6, 0.65, 0.7, 0.75, 0.8, 0.85, 0.9, or 1% (wt/wt).

In embodiments, reagent A comprises sulfate-based and/or sulfonate-based anionic surfactants in an amount resulting in concentration of preferably 0,15 % (wt/wt) in the liquid reaction mixture.

In embodiments, the concentration of the anionic surfactants in the liquid reaction mixture is acids is 0.01, 0.02, 0.03, 0.04, 0.05, 0.06, 0.07, 0.08, 0.09, 0.1, 0.11, 0.12, 0.14, 0.16, 0.18, 0.2, 0.22, 0.24, 0.26, 0.28, 0.3, 0.35, 0.4, 0.45, 0.5, 0.55, 0.6, 0.65, 0.7, 0.75, 0.8, 0.85, 0.9, or 1% (wt/wt).

In embodiments, reagent A and B are composed and mixed in a way that the resulting concentration of hydrogen peroxide in the liquid mixture is in a range of 2 - 50 % (wt/wt), such as 3, 4, 5, 6, 7 ,8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 %, preferably 5 - 10 % (wt/wt).

Furthermore, in embodiments reagent B additionally comprises a hydrogen peroxide stabilizing agent, preferably acetophenone, preferably in an amount resulting in a concentration range of 0.001 - 1 % (wt/wt) in the liquid reaction mixture. In embodiments, the concentration of the hydrogen peroxide stabilizing agent in the liquid reaction mixture is 0.001, 0.002, 0.003, 0.004, 0.005, 0.006, 0.007, 0.008, 0.009, 0.01, 0.02, 0.03, 0.04, 0.05, 0.06, 0.08, 0.1, 0.12, 0.14, 0.16, 0.18, 0.2, 0.22, 0.24, 0.26, 0.28, 0.3, 0.35, 0.4, 0.45, 0.5, 0.55, 0.6, 0.65, 0.7, 0.75, 0.8, 0.85, 0.9, or 1% (wt/wt).

In embodiments, the hydrogen peroxide stabilizing agent is a chelating agent, such as EDTA or EGTA.

In embodiments using EDTA as a hydrogen peroxide stabilizing agent, EDTA can be used in amounts resulting in have the same concentrations that are disclosed for acetophenone.

In embodiments, reagent B additionally comprises one or more saturated fatty acids, such as palmitic acid and/or stearic acid, or a salt thereof, preferably in an amount resulting in a concentration range of 0.01 - 1 % (wt/wt) in the liquid reaction mixture. In embodiments, the concentration of the one or more saturated fatty acids is 0.01, 0.02, 0.03, 0.04, 0.05, 0.06, 0.07, 0.08, 0.09, 0.1, 0.11, 0.12, 0.14, 0.16, 0.18, 0.2, 0.22, 0.24, 0.26, 0.28, 0.3, 0.35, 0.4, 0.45, 0.5, 0.55, 0.6, 0.65, 0.7, 0.75, 0.8, 0.85, 0.9, or 1% (wt/wt).

In embodiments, both reagent A and reagent B a liquid.

In one embodiment, reagent A is liquid and contains
- metal hydroxide, such as NaOH or KOH, e.g. at a concentration of wt/wt 2%, and
- a composition of sulfate or sulfonate based anionic surfactants, e.g. at a concentration of wt/wt 0,15%, and
- preferably densifiers, e.g. at a concentration of wt/wt 0,1%, and
- optionally one or more scents/odorants.

In embodiments, reagent B is liquid and contains
- a superoxide producer, preferably a liquid superoxide producer such as hydrogen peroxide, e.g. in concentration of wt/wt 8%,
- a preferably a stabilizer, e.g. acetophenone in concentration e.g. wt/wt 0,05% and
- preferably one or more unsaturated fatty acids e.g. palmitic acid, in concentration e.g. 0,1%.

In preferred embodiments of the invention, reagent B additionally comprises one or more saturated fatty acids. Preferably, in the context of the method of the invention, the one or more saturated fatty acids of reagent B are saponified in the liquid reaction mixture.

In embodiments, persulfonate anions and/or persulfate anions are formed in the liquid reaction mixture from the one or more sulfate-based and/or sulfonate-based anionic surfactants of reagent A.

In embodiments, in the liquid reaction mixture reagents A and B interact one with each other, where the alkaline from the reagent A activates dissociation of hydrogen peroxide of reagent B with superoxide ions production. Simultaneously, the alkaline from reagent A saponifies the saturated fatty acid from reagent B to form surface-active Na or K salt. Subsequently, superoxide ions in the resulting solution activate the sulfate and sulfonate based anionic surfactants from reagent A into persulfates/persulfonates anions, respectively, with following creation of oxidation-activated surfactant micelles. The resulting solution of activated micelles and surface-active salts from both reagents provides powerful cleaning performance for the solution/reaction directly on the substrate in the interaction with contaminant.

In embodiments, the one or more organic pollutants present on the contaminated substrate are selected from the group comprising POPs, polycyclic aromatic hydrocarbons (PAHs), chlorinated solvents, petroleum products, pharmaceutical leftovers, and other organic pollutants such as oils, paint stains and tars.

In embodiments, the contaminated substrate is selected from the group comprising porous solid substrates, such as soils or sand, granular solid substrates, and surface solid substrates, including gravel, stony material, concrete and solid surfaces (of various materials).

In embodiments, the substrate is incubated with the liquid reaction mixture for a certain period of time before removing, i.e. washing off, the liquid reaction mixture which then comprises the removed and potentially degraded pollutants. The incubation before removal of the mixture may in preferred embodiments be at least 5 minutes. The incubation time may depend on the kind of organic pollutant, the degree of pollution, i.e. the amount of the pollutant, and on the nature and form of the substrate. For example, porous or sandy contaminated substrates may require longer incubation time than smooth surfaces.

In embodiments, the incubation time of the liquid reaction mixture with the contaminated substrate before removing the mixture is at least 1, 2, 3, 4, 5, 6, 7, 8, 9, 10, 11, 12, 13, 14, 15, 16, 17, 18, 19, 20, 22, 24, 26, 28, 30, 35, 40, 50, 55, 60, 65, 70, 80, 90, 100, or 110 minutes, or 2, 3, 4, 5, 6, 7, 8, 9, 10, 11, 12 or more hours.

For complete or more thorough removal of the organic pollutants it may in embodiments be necessary to repeat the method of the invention several times. This may particularly be the case if the substrates are extremely dirty, i.e. if high amount of organic pollutants are deposited on the substrate. Also, this may be the case for porous substrates, where pores are filled with the pollutant and the upper layers of pollutant may have to be removed first before the lower layer, i.e. in the pores, can be removed.

In a further aspect, the invention also relates to a system or kit comprising in two separate containers
- a reagent A of a method according to any one of the preceding claims comprising a base and one or more sulfate-based and/or sulfonate-based anionic surfactants, and
- a reagent B of a method according to any one of the preceding claims comprising hydrogen peroxide, and
- optionally means for forming the liquid reaction mixture from reagent A and reagent B and/or means for applying the liquid reaction mixture, reagent A and/or reagent B to a substrate.

In embodiments, the kit comprise comprises means for applying the liquid reaction mixture and/or means for applying reagent A or reagent B. For example, spraying devices for applying liquids may be provided. The can be individual spraying devices, one for a liquid reagent A and one for a liquid reagent B, which enable simultaneous application of reagent A and B by using the devices at the same time for applying the reagents to the substrate, or individual sequential application of the liquid reagents. Alternative spraying devices may be constructed in a way that reagent A and B are stored as liquids in the device individually, i.e. without mixing, and the device enables mixing of the reagents upon effecting application of the reagents. For example upon effecting the spraying device reagent A and B may be pumped out of their separate storage spaces and may be mixed in a tubing system leading to an outlet so that the liquid sprayed out of the device is a liquid reaction mixture in the sense of the invention. Further suitable means for applying the reagents A and B of the invention or for forming the liquid reaction mixture of the invention can be designed by a skilled person depending on the specific application of the invention, i.e. the pollutant and substrate. Depending on the polluted/contaminated substrate to be cleaned, the preferred means for application of the reaction mixture or the reagents A and B may differ.

Features and advantages of the invention that are herein disclosed in the context of one aspect of the invention, such as the method of the invention, are herewith also disclosed in the context of all other aspects of the invention, such as the system of kit, and vice versa.

### DETAILED DESCRIPTION OF THE INVENTION

The invention is directed to a method for removal, degradation and/or detachment of one or more organic pollutants from a contaminated substrate by contacting a liquid reaction mixture of a reagent A and a reagent B with the POP-contaminated substrate, characterized in that
a. reagent A comprises a base, preferably a basic/alkali metal hydroxide, and one or more sulfate-based and/or sulfonate-based anionic surfactants, and
b. reagent B comprises hydrogen peroxide or other superoxide producer that has hydrogen peroxide as one of intermediate reaction steps.

As used herein, it is understood that organic pollutants are all kind of organic deposits or remains on a substrate, such as on a solid surface. Pollutants refers to dirt, remains surface deposits, debris, waste, rest or organic substances that contaminate a substrate. This includes as diverse organic pollutants or soiling on diverse substrates, such as on natural stone, tiles, concrete, wood, facade plaster or mineral sealants. Illustrative examples of organic remains to be removed by means of the present invention include organic pollutants on kitchen surfaces, such as contaminating fat or grease, contaminations of handrails in public spaces, organic dirt on terraces and house facades or garden furniture. Further organic pollutant contaminations in the sense of the invention include oil-spills on substrates, such as sand or soil.

Organic pollutants in the sense of the invention include persistent organic pollutants (POPs) such as for example polychlorinated hydrocarbons (PCHs), polycyclic aromatic hydrocarbons (PAHs), polychlorinated biphenyls (PCBs), chlorinated solvents, petroleum products and pharmaceutical leftovers. In further embodiments of the invention, POPs comprise all kinds of harmful hydrocarbons that are known to a skilled person. As used herein, POPs comprise persistent organic pollutants as described by the current version of the Stockholm Convention (United Nations treaty, signed on May 22, 2001).

It is a great advantage of the invention that it is efficient in degrading and removing a great variety of contaminating organic pollutants including POPs from substrates and is not limited to a certain subgroup or class. It is particularly advantageous that hazardous POPs such as PCHs, PAHs and PCBs, chlorinated solvents, petroleum products and pharmaceutical leftovers can be degraded by the method of the invention.

In the context of the present invention, a contaminated "substrate" can be any kind of contaminated material, which may be found in the environment, such as all kinds of soils, sands, stones, gravel, and even biological materials, such as plants. In preferred embodiments the method and means of the invention are used for surface cleaning of surfaces of various materials such as stone, including natural and artificial stone, concrete, tiles, wood, facade plaster, or mineral sealants. Surfaces to be cleaned by the present invention include planar surfaces but also surfaces of porous material, where for example the organic pollutants may be situated in the pores of a porous stone, but also surfaces of sandy, powdery or siliceous material.

Exemplary substrates comprise all kinds of contaminated solid materials, objects, liquids, or items that have been exposed to or contain or are covered with contaminating organic materials, such as POPs. Substrates of the invention comprise mineral oil, surfaces of machines and technical materials or equipment, such as, for example, railway tracks, but also kitchen surfaces, contaminates soil and sand.

The method and means of the invention are for removal, degradation and/or detachment of organic pollutants form an organic substrate. In the context of the invention, the components of the liquid reaction mixture and in particular the components generated from the reaction of the reagent A with reagent B, lead to detachment and/or degradation of organic pollutants present on the substrate, which makes it possible to remove the contaminants from the substrate. Accordingly, it is understood that the invention is for cleaning off organic pollutants from a substrate that is contaminated with these pollutants.

Reagent A preferably comprises basic metal hydroxide (MOH), preferably an NaOH or KOH, and sulfate-based and/or sulfonate-based anionic surfactants.

Metal hydroxides are hydroxides of metals. They are often strong bases. They consist of hydroxide anions and metallic cations. Some metal hydroxides, such as alkali metal hydroxides, ionize completely when dissolved. Certain metal hydroxides are weak electrolytes and dissolve only partially in aqueous solution. Metal hydroxides comprise for example aluminum hydroxide, beryllium hydroxide, cobalt(II) hydroxide, copper(II) hydroxide, curium hydroxide, gold(III) hydroxide, iron(II) hydroxide, mercuη(II) hydroxide, nickel(II) hydroxide, tin(II) hydroxide, uranyl hydroxide, zinc hydroxide or zirconium(IV) hydroxide.

More preferably the basic solution 1 comprises an alkali hydroxide, such as for example lithium hydroxide (LiOH), sodium hydroxide (NaOH), potassium hydroxide (KOH), rubidium hydroxide (RbOH) or cesium hydroxide (CsOH), most preferably NaOH or KOH.

In embodiments, the base of reagent A may be sodium methylate (CH₃ONa, also called sodium methoxide), which is formed by the deprotonation of methanol and is a routinely used base in organic chemistry.

Reagent A of the present invention comprises sulfate-based and/or sulfonate-based anionic surfactants.

Surfactants are compounds that lower the surface tension (or interfacial tension) between two liquids, between a gas and a liquid, or between a liquid and a solid. Surfactants may act as detergents, wetting agents, emulsifiers, foaming agents, or dispersants. Surfactants are usually organic compounds that are amphiphilic, meaning they contain both hydrophobic groups (theirtails) and hydrophilic groups (their heads). Therefore, a surfactant contains both a water-insoluble (or oil-soluble) component and a water-soluble component. Surfactants will diffuse in water and adsorb at interfaces between air and water or at the interface between oil and water, in the case where water is mixed with oil. The water-insoluble hydrophobic group may extend out of the bulk water phase, into the air or into the oil phase, while the water-soluble head group remains in the water phase. The "tails" of most surfactants are fairly similar, consisting of a hydrocarbon chain, which can be branched, linear, or aromatic. Surfactant molecules have either one tail or two; those with two tails are said to be double-chained. Most commonly, surfactants are classified according to polar head group. A non-ionic surfactant has no charged groups in its head. The head of an ionic surfactant carries a net positive, or negative charge. If the charge is negative, the surfactant is more specifically called anionic; if the charge is positive, it is called cationic. If a surfactant contains a head with two oppositely charged groups, it is termed zwitterionic.

Anionic surfactants contain anionic functional groups at their head, such as sulfate and sulfonate, which are used in the context of reagent A of the invention, or phosphate, and carboxylates. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Others include docusate (dioctyl sodium sulfosuccinate), perfluorooctanesulfonate (PFOS), perfluorobutanesulfonate.

Further preferred sulfate-based and/or sulfonate-based anionic surfactants that can be comprised in reagent A are listed in Table 1.

**Table 1.**

| | |
|---|---|
| Alkyl sulfates | 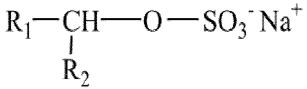 |
| R-CH₂-O-SO₃⁻Na⁺ | |
| Alkyl ether sulfates | 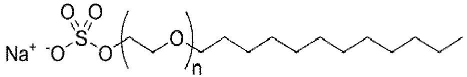 |
| 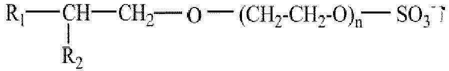 | |
| | *where n* = *1...6* |
| Secondary alkane sulfonates | Linear alkylbenzene sulfonates |
| 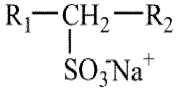 | 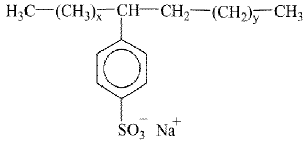 (x+y = 6-9) |
| Alkylbenzene sulfonates | *where any above R, R₁ and R₂ can be considered more specifically* as *linear H₃C-(CH₂)ₘ- and - (CH₂)ₙ-CH₃ alkane substituents, wherein preferably (m*+*n)*= *9 to 14.* |
| 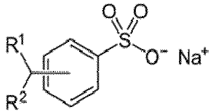 | |
| R¹ + R² = C₁₁H₂₄ | |

In embodiments, the sulfate-based and/or sulfonate-based anionic surfactants of reagent A can comprise or be isethionates. Isethionates are esters of long-chain aliphatic carboxylic acids (C8 - C18) with isethionic acid (2-hydroxyethanesulfonic acid) or salts thereof, such as ammonium isethionate or sodium isethionate. They are also referred to as acyl isethionates or acyloxyethanesulfonates and have the following formula: 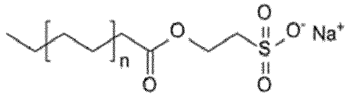 n = 1...7

In embodiments, the sulfate-based and/or sulfonate-based anionic surfactants of reagent A can comprise or be sodium sulfosuccinate esters according to the following formula:

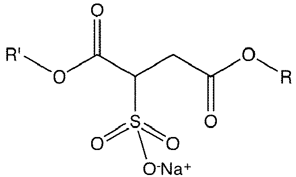

The sodium sulfosuccinate esters can be monoesters (when R' = H, R = alkyl) or diesters (R and R' = alkyl).

In general, the organosulfates (sulfonates) are the batch of classes of organic compounds sharing a common functional group with the structure R-O-SO₃⁻. The SO₄ core is a sulfate group and the R group is any organic residue. All organosulfates are formally esters derived from alcohols and sulfuric acid, although many are not prepared in this way.

A sulfonate is a salt or ester of a sulfonic acid. It contains the functional group R-SO₃⁻, where R is an organic group. Sulfonates are the conjugate base of sulfonic acids.

In embodiments, persulfonate anions and/or persulfate anions are formed in the liquid reaction mixture from the one or more sulfate-based and/or sulfonate-based anionic surfactants of reagent A.

The sulfate-based and/or sulfonate-based anionic surfactants of reagent A are preferably present in the liquid reaction mixture in a concentration that is higher than their corresponding critical micelle concentrations (>0.02...0.1wt.%). In the presence of hydrogen peroxide of reagent B in the liquid reaction mixture, wherein the concentration of hydrogen peroxide in the liquid mixture may preferably be in the range of 1-10 wt%, preferably around 5 wt %, the sulfate-based and/or sulfonate-based anionic surfactants form persulfonate anions and/or persulfate anions, which possess a high oxidation potential in comparison to other chemical compounds, in particular the organic pollutants of the invention. This process basically corresponds to the following chemical reaction:

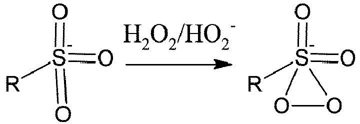

The persulfonate anion reacts with water at pH > 1.5 by the following reaction:

SO₄^{*-}+ H₂O→SO₃⁻+ ^{*}OH+ H⁺

The standard oxidation reduction potential for this reaction is 2.1 V as compared to 1.8 V for hydrogen peroxide, which makes the persulfonates an extremely strong oxidant agents.

The formed *OH radical is highly reactive and recombinates as following:

2*OH →H₂O+ ½ O₂

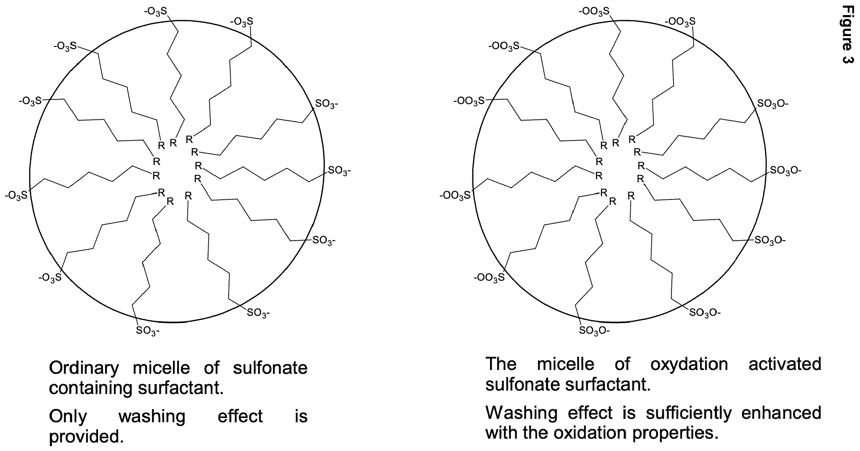

In the context of the present invention, in the liquid reaction mixture can comprise micelles of sulfate-based and/or sulfonate-based anionic surfactants ("sulfate or sulfonate micelles") which go through the reaction stage described herein to form persulfonate anions on the micelle outer layer ("persulfonate micelles"), which rapidly react with the organic pollutants providing the oxidation of the pollutants, for example of active functional groups or unsaturated bonds, leading to the decomposition of the complex organic pollutants, such as proteins, fats, or oil products. The process of generating persulfonate micelles is depicted in Figure 3.

In embodiments, the liquid reaction mixture therefore represents a high-density micelle self-assembled system comprising persulfonate micelles and rapidly decomposes organic pollutants to the small products through oxidation. Such synergism between the formation of the micelles formed by the surfactants of reagent A (washing effect) and the oxidation properties of both superoxide and persulfonate anions generated in the liquid reaction mixture provides the unique washing effect of the present invention.

Reagent A may further comprise one or more of a polysaccharide-based densifier, and an ordorant. Polysaccharide-based densifiers of the invention comprise, without limitation, hypromellose, carboxymethylcelluloses of different grades, hydroxy propyl methyl cellulose, ethylcellulose or various gums such as guar, xanthan or other gums. Additionally non-polysaccharide densifiers such as polyoxyethene stearate or other polyethylene glycols may be used instead or in addition.

Odorants (herein also referred to as scents) to be used in the context of reagent A of the invention comprise preferably any kind of powder or liquid odorant with water solubility above 50 mg/kg that is stable in a strong alkaline medium, i.e. in reagent A.

Commercially available odorants fulfilling these preferred requirements are widely used in the field and can be identified by a skilled persion.

Reagent B comprises hydrogen peroxide or other superoxide producer that has hydrogen peroxide as one of intermediate reaction steps. Examples of superoxide producers that have hydrogen peroxide as one of intermediate reaction steps comprise sodium percarbonate (formula Na₂H₃CO₆), sodium perborate (chemical formula written as NaH₂BO₄, Na₂H₄B₂O₈, or [Na⁺]₂·[B₂O₄(OH)₄]²⁻), and sodium persulphate (formula Na2S2O8).

Hydrogen peroxide is the preferred superoxide producer to be used in the context of the present invention as a component of reagent B.

In general, during the performance of the method of the present invention superoxide anions (O₂⁻) are generated in the liquid reaction mixture via a reaction of hydrogen peroxide of reagent B and the base, preferably a metal hydroxide, such as NaOH or KOH, according to the following sequence of reactions:
(I) 2MOH + H₂O₂-> M₂O₂+ 2H₂O
(II) M₂O₂+ 2H₂O₂ -> 2MO₂ + 2H₂O

In the context of the above formula, MOH stands for metal hydroxide, such as NaOH, but could be replaced by any other base that may be able to generate OH⁻ anions in aqueous solution.

In the context of the present invention, superoxide (O2-•) is generated in basic or alkaline conditions of the liquid reaction medium, as described in WO2019120940A1.

In preferred embodiments, hydrogen peroxide of reagent B produces the superoxide ions in the liquid reaction mixture.

In embodiments, reagent B comprises hydrogen peroxide stabilizing agent, preferably acetophenone. The hydrogen peroxide stabilizing agent, such as acetophenone, is used to improve the stability of H₂O₂ in reagent B before performing the method of the invention including forming the liquid reaction mixture of reagent A and B and bringing it into contact with the contaminated substrate.

Hydrogen peroxide stabilizing agents are mostly chelants and sequestrants which minimize its decomposition under normal storage and handling conditions. Common stabilizers include sodium citrate, colloidal stannate and sodium pyrophosphate (preferably present at 25 - 250 mg/L), organophosphonates (e.g., Monsanto's Dequest products), nitrate (for pH adjustment and corrosion inhibition), and phosphoric acid (for pH adjustment), colloidal silicate (is also used to sequester metals and thereby minimize H₂O₂ decomposition). Further H₂O₂ stabilizers are described in EP2225175B1.

Acetophenone is a preferred hydrogen peroxide stabilizer to be used in the context of the invention and has the following formula:

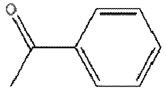

The stability test results have proven that acetophenone is a good stabilizing agent for hydrogen peroxide solutions even at concentration of < 0.01wt.%, in a liquid embodiment of reagent A. Additionally, acetophenone provides a friendly aroma/odor of reagent B, and coming in interaction with odorant of reagent A effectively eliminates malodors during the cleaning process.

In preferred embodiments, reagent B additionally comprises one or more saturated fatty acids, such as palmitic acid and/or stearic acid, or a salt thereof.

In preferred embodiments, saturated fatty acids with different chain-length, e.g. palmitic or stearic acid, etc., form a thin film of on the surface of liquid forms of reagent B under storage conditions, making reagent B less interacting with the environment thus longer stable in storage, i.e. lead to a prolonged shelf life of reagent B. Furthermore, through the interaction with the base from reagent A in the liquid reaction mixture of the invention, the saturated fatty acids become saponified obtaining surface-active properties that are synergistic with those of the components of reagent A. Saponification is depicted in the following formula:

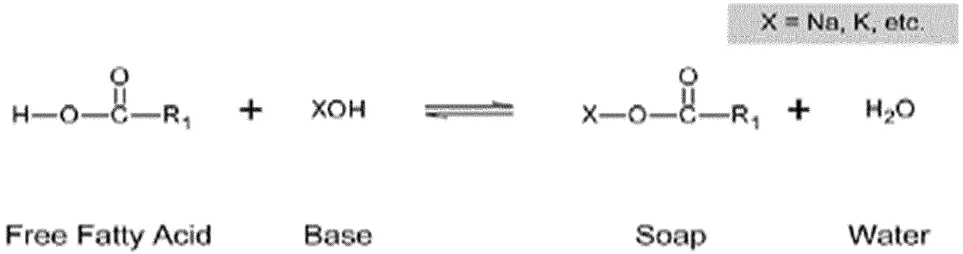

Saturated fatty acids to be used in the context of the present invention comprise in particular palmitic acid and stearic acid. Fatty acid is a carboxylic acid with an aliphatic chain. Saturated fatty acids have no C=C double bonds. They have the same formula CH₃(CH₂)ₙCOOH, with variations in "n". An important saturated fatty acid is stearic acid (n = 16), which when neutralized with lye is the most common form of soap. Examples of saturated fatty acids for use in the context of the invention include Caprylic acid, Lauric acid, Myristic acid, Palmitic acid, Stearic acid, Arachidic acid, Behenic acid, Lignoceric acid, Cerotic acid.

Saponification is a process that involves the conversion of fat, oil, or lipid, into soap and alcohol by the action of aqueous alkali (e.g. NaOH). Soaps are salts of fatty acids, which in turn are carboxylic acids with long carbon chains.

### Embodiments of the invention relating to surface cleaning

In embodiments, the invention can be used for cleaning surfaces. Therein, the reagents A and B of the invention can include the following components:
Reagent A preferably comprises the following components:
- Hypromellose
- Sodium hydroxide
- Sodium alkyl sulfates (SAS)
- Sodium dodecyl sulfate
- Sodium laureth sulfate
- Water
- Alkaline compatible odorant

In a more preferred embodiment, reagent A, comprises:
- Hypromellose
- Sodium hydroxide
- Sodium alkyl sulfates (SAS)
- Sodium dodecyl sulfate
- Sodium laureth sulfate
- Sodium oleate
- Sodium palmitate
- Water
- Alkaline compatible odorant

Reagent B preferably comprises
- Hydrogen peroxide
- Acetophenone

More preferably, reagent B comprises
- Hydrogen peroxide
- Acetophenone
- Sodium palmitate

By means of mixing the reagents A and B in a liquid reaction mixture the reaction starts, where the superoxide ions produced that improve the cleaning power of the formulation and contribute to generating the persulphate/persulphonate activated micelles from the sulphate/sulphonate based micelles that pre-existed in Reagent A.

In presence of the liquid reaction mixture comprising the activated micelles the organic pollutants (i.e. contaminants) of different nature are detached from the surface with high efficiency. The special viscosity, foaming and surface-active properties of the mixed reagents A and B do not allow contaminant molecules to adhere to the cleaned surface during the whole cleaning process thus making the contaminants (including oily and persistent contaminants) easy to wash out with water after the cleaning process is finished.

During the reaction foam and gases are produced, which can be deodorized with combination of acetophenone present in reagent B and suitable odorant from reagent A. Accordingly, in embodiments the whole cleaning process produces no bad odors unlike many conventional industrial cleaners.

### Embodiments relating to the separate use of the reagents A and B for cleaning

In embodiments, a liquid solution of reagent A separately possess surface activity that provides it with cleaning power enough to wash some contaminations from the surfaces. In such mode of application, the reagent A behaves as a regular cleaning agent, not possessing any oxidative properties. At the same time the cleaning reaction in such a case has no decolorization abilities and does not destroy sensitive surfaces if present in the cleaning process.

For such a sensitive surface washing in certain embodiments of the solution of reagent A the concentration of MOH, such as NaOH, can be reduced to low levels below 1%, or instead of for example NaOH some other alkaline agents having less aggressive impact on surfaces, such as metals, can be used.

In embodiments, reagent B can be applied separately in situations where the surface was previously cleaned by the alkaline cleaning solution of reagent A that were not removed properly and there are leftovers on the surface. Otherwise, reagent B can be applied separately form reagent A in case of the surface need to be mildly decolorized.

### Embodiments relating of gravel cleaning

In embodiments, the method of the invention can be used for gravel cleaning. Similar to the embodiment relating to surface cleaning, the technology could be adjusted to the fact that there is higher adsorption of the reagents on the substrate particles/stones.

For such conditions, it was established through scale up laboratory tests, that to reach all the surfaces of the contaminated substrate that needs to be cleaned up by the reagents and solution it was appropriate to use higher amounts of foam forming agents such as various surfactants, in particular the surfactants and foam forming agents that are already present in reagent A and reagent B as described herein, or also other foaming agents that are compatible with the invention, such as industrial surfactants e.g. sulphanol.

Foam forming surfactants improve gravel surfaces cleaning and additional surfactants may be included in reagent A or may be applied directly after addition of reagent A before adding reagent B, to cover most of the substrate surfaces being processed.

### Embodiments for porous substrates cleaning

In embodiments, the method of the invention is used for porous substrate cleaning. Porous substrates to be cleaned by the method of the invention could include porous surfaces or porous bulky substrates or contaminated sand or similar substrates. In such embodiments, it is preferred that the method performance is improved by including a step of active inducing foaming on the surface of the substrate, for example by active mixing of the bulky substrate after adding the liquids of the method of the invention.

The foaming agent could comprise any surfactants or surface-active component disclosed herein. It could be added specially in addition to the mandatory sulfate-based and/or sulfonate-based anionic surfactants of reagent A. For example, industrial anionic surfactants and detergents and their different mixes e.g. sulphanol or similar, could be added as foaming agents to reagent A or B or to the liquid reaction mixture..

### Embodiments relating to medical waste cleaning and disinfection

The oxidative conditions generated during the method of the invention enables using the method of the invention for disinfection, for example in the context of cleaning rooms, spaces and objects that are suspected of infectious contamination. The method of the invention enables effective destruction of lipid membrane coverage of microorganisms including viruses and bacteria. The superoxide-activated persulphate/persulphonate micelles produced during the method of the invention possess both oxidative potential and detergent properties, which are needed for disinfection.

### Embodiments relating to premixed reagents 1 and 2 in a single component solution

In embodiments of the method of the invention, the reagents A and B could be prepared pre-mixed, both directly before application or manufactured pre-mixed in an industrial way with a significant shelf-life. The pre-mixed solution will necessarily contain the superoxide-activated persulphate/persulphonate micelles produced via the reaction between reagent A and reagent B.

In embodiments where reagent A and reagent B are premixed to form a liquid solution, the solution should be properly stabilized by a special stabilizer comprising but not restricted to acetophenone used regularly in reagent B but in higher concentration (0.001 - 1,5 % (wt/wt)) or other stabilizing agents (such as chelation agents e.g. EDTA). To provide better longevity to the solution it could contain lower concentrations of both the base and hydrogen peroxide or other superoxide producer that has hydrogen peroxide as one of intermediate reaction steps, which will facilitate the stabilizing process. In some cases, such a premixed formulation could comprise in the liquid reaction mixture, or as separate component that can be added to the reaction mixture directly before its application, special reaction activators, such as, without limitation, a catalyzer such as MnO₂ and similar (for example other metal oxides) which would promote activation of oxidizing process when applied on surface.

### Embodiments relating to low foaming solutions for machine cleaning

In certain embodiments of the present invention, the reagents A and B can be used in washing machines during industrial cleaning processes. In such applications, active foaming of the liquids of the invention could be detrimental. Therefore, foam should be suppressed mechanically in such applications, or reagent A could be modified for such applications by reducing surfactant components concentrations and raising alkaline concentration, but still necessary sulfate/sulphonate by its nature not to violate the superoxide-activated persulphate/persulphonate micelles formation during the reaction in cleaning process.

Furthermore, some chemical foaming suppressors could be included into the formulation, for example in reagent A or reagent B, comprising but not restricted to chlorinated hydrocarbon compounds.

### Embodiments relating to dry concentrated reagents A and B

In certain embodiments of present invention, reagent A and/or reagent B may be dry compositions (solids/powders/granular compositions), where the reagent A could be provided as dry alkaline comprising but not restricted to alkaline metal hydroxides such as NaOH, KOH or similar in granular form, and/or wherein the hydrogen peroxide of reagent B could be substituted with dry hydrogen peroxide producers comprising but not restricted to sodium percarbonate or similar crystallohydrates. In such embodiemnts, hydrogen peroxide stabilizers should not be added to reagent B. In case of using a reagent B in granular form, the stabilizing effect can be gained through physical stabilization e.g. granular coating or similar for the crystallohydrate hydrogen peroxide producer.

The application of the dry reagents A and B could be provided via dissolving in water before the cleaning process and then mixing as in regular way of application, or via application on the cleaned surface in dry form and then activation with water directly on surface, or via mixing the dry reagents A and B in solid state before application or in industrial process, where the reagents dry mix should be packed and hermetically sealed and stay dried without any access of water or humid air into the package. Resulting shelf life of such a mix could be shorter than for separate storage or original liquid reagents.

### FIGURES

The invention is further described by the following figures. These are not intended to limit the scope of the invention but represent preferred embodiments of aspects of the invention provided for greater illustration of the invention described herein.

Description of the figures:
**Figure 1****:** Comparison of the foaming activity between the method of the invention and a similar method of the state of the art.
**Figure 2****:** Comparison of redeposition between the method of the invention and a similar method of the state of the art.
**Figure 3****:** Generation of persulfonate micelles from sulfate or sulfonate micelles as described herein. Oxidation of sulfonate surfactants that form micelles in reagent A and/or the liquid reaction mixture through mixing reagent A and B results in the formation of persulfonate micelles with enhanced oxidation properties in addition to the washing effect.

### EXAMPLES

The invention is further described by the following examples. These are not intended to limit the scope of the invention but represent preferred embodiments of aspects of the invention provided for greater illustration of the invention described herein.

The present invention is based on our previously described method of WO2019120940A1 for the removal, separation, or degradation of persistent organic pollutants from a substrate where the substrate could comprise contaminated surfaces. However, the present invention differs from the previous method in particular due to the use of sulfate-based and/or sulfonate-based anionic surfactants.

The method of WO2019120940A1 (herein also referred to as the "basic formula") is similar to the method of the invention and has a similar purpose, which is why the two methods are herein compared for the application of cleaning of contaminated surfaces.

For example, the basic formula and the present invention could be compared by the foaming ability. Foaming ability is a good performance indicator of the solution regarding its application to clean out the heterogenous contaminants. As the foam floats on the liquid it's easy to wash out the contamination preventing it from being captured into the porous surfaces (soil, concrete, bricks, etc.).

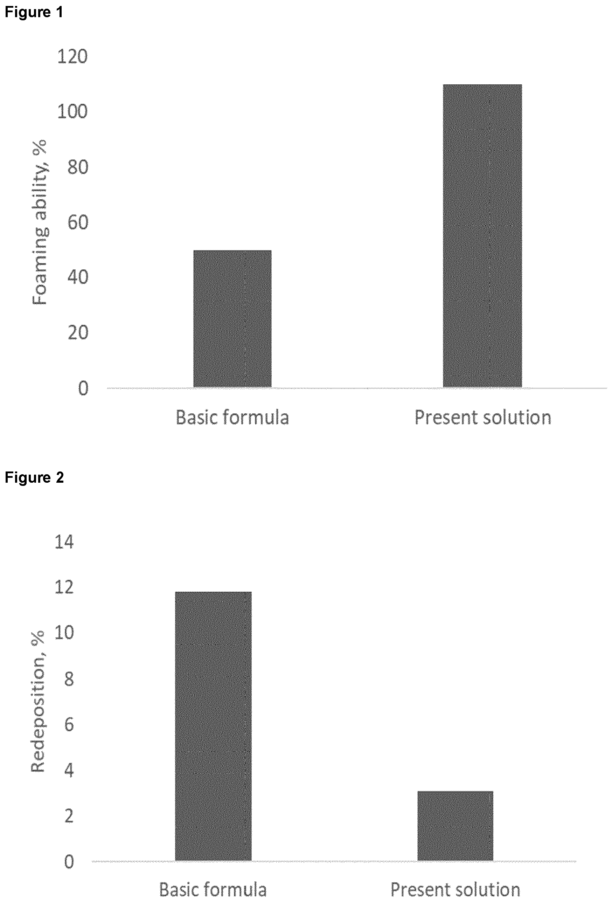

*Figure 1* clearly shows that for the solution described by the present invention (present solution) the foaming activity is significantly higher than for the formula described by the basic patent (basic formula) therefore the cleaning performance of the present solution is going to be higher as well.

The testing procedure was performed as follows:
- One adds 30 mL of the prepared formula sample (Vo) in the 100 mL glass cylinder and the added volume is aerated for 2 minutes.
- Immediately after the aeration process ended the volume of the obtained foam in mL (Vi) excluding the sample added volume is considered as the sample foaming property:
- Foam ability, % = 100*(V₁ - V₀)/V₀

Furthermore, the present solution was compared with the basic formula by the anti-resorption ability. Anti-resorption ability characterizes the stabilizing effect of cleaning solutions (detergents). Industrial cleaning solutions should not only remove dirt/pollution/soils from the surface but also keep them in solution preventing the re-deposition, that is, exhibit the stabilizing effect. As cleaning solutions based on synthetic detergents predominantly show a relatively weak ability to retain contaminants in the solution, the small particles of dirt could be re-deposited on the surface to be cleaned. The anti-resorption ability is also the indicator of how easily the detergent can be washed out.

*Figure 2* depicts the difference in anti-resorption ability between the basic formula and the present solution, where the lower is the redeposition% the better is cleaning performance. As it could be easily seen the present solution demonstrates better performance than the basic formula.

The experiment of Figure 2 was performed as follows:
- One prepares dry 1L chemical beaker and weights it (m₀).
- One places the 100 mL of prepared formula solution into 1L chemical beaker and then adds 100 mL of model solution containing 0.05g of NaCl with 0.001g of FeCl₃ and 0.001g of sodium metasilicate and leaves it for 1 hr. at a room temperature.
- Then one drains and washes out the mixture with 200 mL of the distilled water and dries the beaker.
- After the beaker is dried one weights it again (m₁) so the anti-resorption ability, % can be calculated as: 100*(m₁-m₀)/a,
   where 'a' equals to:
   5.302 - as the total mass of components for NaOH 5wt.% formula.
   2.302 - as the total mass of components for NaOH 2wt.% formula.

## Claims

1. A method for removal, degradation and/or detachment of one or more organic pollutant(s) from a contaminated substrate by contacting a liquid reaction mixture of a reagent A and a reagent B with the contaminated substrate, **characterized in that**
a. reagent A comprises a base, preferably a basic/alkali metal hydroxide, and one or more sulfate-based and/or sulfonate-based anionic surfactants, and
b. reagent B comprises hydrogen peroxide or other superoxide producer that has hydrogen peroxide as one of intermediate reaction steps.

2. The method according to claim 1, wherein reagent A additionally comprises a polysaccharide-based densifier, wherein preferably the densifier has a concentration range of 0.01 - 1 % (wt/wt), more preferably in a concentration of about 0.1 % (wt/wt), in the liquid mixture.

3. The method according to any one of the preceding claims, wherein reagent A additionally comprises an odorant, wherein preferably the odorant has a concentration range of 0.001 - 1 % (wt/wt) in the liquid mixture.

4. The method according to any one of the preceding claims, wherein the base of reagent A comprises a basic metal hydroxide (MOH), preferably an NaOH or KOH, wherein the concentration of MOH in the liquid mixture is in the range of 0,1 - 30 % (wt/wt), preferably 1-5 % (wt/wt).

5. The method according to any one of the preceding claims, wherein the resulting concentration of hydrogen peroxide in the liquid mixture is in a range of 2 - 50 % (wt/wt), preferably 5 - 10 % (wt/wt) .

6. The method according to any one of the preceding claims, wherein reagent B additionally comprises a hydrogen peroxide stabilizing agent, preferably acetophenone, preferably in an amount resulting in a concentration range of 0.001 - 1 % (wt/wt) in the liquid reaction mixture.

7. The method according to any one of the preceding claims, wherein reagent B additionally comprises one or more saturated fatty acids, such as palmitic acid and/or stearic acid, or a salt thereof, preferably in an amount resulting in a concentration range of 0.01 - 1 % (wt/wt) in the liquid reaction mixture.

8. The method according to the preceding claim, wherein in the liquid reaction mixture the saturated fatty acids of reagent B are saponified.

9. The method according to any one of the preceding claims, wherein in the liquid reaction mixture persulfonate anions and/or persulfate anions are formed from the one or more sulfate-based and/or sulfonate-based anionic surfactants of reagent A.

10. The method according to any one of the preceding claims, wherein the liquid mixture of reagent A and reagent B is formed priorto contacting the substrate, wherein the liquid mixture of reagent A and reagent B is formed on the substrate after contacting reagent A and reagent B with the substrate.

11. The method according to any one of the preceding claims, wherein
a. reagent A and reagent B are liquid solutions which are mixed for forming the liquid reaction mixture, or
b. reagent A and reagent B are solids, such as powders, which are dissolved in a liquid, such as water, for forming the liquid reaction mixture, or
c. one of reagent A and reagent B is a solid, such as a powder, and the other of reagent A and reagent B is a liquid solution, wherein the liquid reaction mixture is formed by mixing (and thereby dissolving) the solid reagent with the liquid reagent.

12. The method according to any one of the preceding claims, wherein the one or more organic pollutants are selected from the group comprising persistent organic pollutants (POPs) such as polycyclic aromatic hydrocarbons (PAHs), chlorinated solvents, petroleum products, pharmaceutical leftovers, and other organic pollutants such as oils, paint stains and tars.

13. The method according to any one of the preceding claims, wherein the substrate is selected from the group comprising porous solid substrates, such as soils or sand, granular solid substrates, and surface solid substrates, including gravel, stony material, concrete and solid surfaces (of various materials).

14. The method according to any one of the preceding claims, wherein the substrate is incubated with the liquid reaction mixture for at least 5 minutes, and the liquid is subsequently removed from the substrate.

15. A system or kit comprising in two separate containers
a. a reagent A of a method according to any one of the preceding claims comprising a base and one or more sulfate-based and/or sulfonate-based anionic surfactants, and
b. a reagent B of a method according to any one of the preceding claims comprising hydrogen peroxide, and
c. optionally means for forming the liquid reaction mixture from reagent A and reagent B and/or means for applying the liquid reaction mixture, reagent A and/or reagent B to a substrate.
